Europäisches Patentamt

European Patent Office

Office européen des brevets

(11) Veröffentlichungsnummer: **0 300 081 B1**

# (12) EUROPÄISCHE PATENTSCHRIFT

(45) Veröffentlichungstag der Patentschrift: 08.05.91

(21) Anmeldenummer: 87111331.2

(22) Anmeldetag: 05.08.87

(51) Int. Cl.⁵: **B29B 7/76**, F16K 11/22, B29B 7/72

(54) Ventil.

(30) Priorität: 23.06.87 DE 3720738

(43) Veröffentlichungstag der Anmeldung:
25.01.89 Patentblatt 89/04

(45) Bekanntmachung des Hinweises auf die
Patenterteilung:
08.05.91 Patentblatt 91/19

(84) Benannte Vertragsstaaten:
CH DE ES FR GB IT LI

(56) Entgegenhaltungen:
DE-A- 1 679 887
DE-A- 2 125 679
DE-A- 3 431 112

(73) Patentinhaber: SPÜHL AG
Lukasstrasse 18
CH-9009 St. Gallen(CH)

(72) Erfinder: Mumenthaler Fritz, Dipl.-Ing. HTL
Winkelriedstr. 36
CH-9000 St. Gallen(CH)

(74) Vertreter: Riebling, Peter, Dr.-Ing., Patentanwalt
Rennerle 10, Postfach 31 60
W-8990 Lindau/B.(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Ventil mit einem Gehäuse mit einem Aufnahmeraum, der durch eine Membran in eine erste steuerseitige Kammer unterteilt ist, die über einen ersten Anschluß an einem Steuerdruck angeschlossen werden kann, sowie in eine zweite, medienseitige Kammer, die über wenigstens einen zweiten Anschluß an ein unter Druck stehendes Medium angeschlossen werden kann und in der eine mit der Membran verbundene Düsennadel abhängig vom Steuerdruck relativ zu ihrem Sitz verschiebbar ist derart, daß ein Auslaß der zweiten Kammer verschlossen bzw. geöffnet wird, wobei die Membran über eine Feder in die Schließlage der Nadel vorgespannt ist.

Ein derartiges Ventil beschreibt die DE-OS 34 31 112. Dieses Ventil, wie auch das Ventil der vorliegenden Erfindung, dient als Dosierventil und/oder Rezirkulationsventil. Dort hat die Membran mittig ein Loch, durch das die Düsennadel hindurchgeführt ist. Dadurch bedingt ist die Membran aber bruchgefährdet und es können dort auch Undichtigkeiten auftreten. Weiterhin bedingt diese Konstruktion, daß beim Öffnen bzw. Schließen des Ventils die Membran schlagartig umklappt. Dadurch ergeben sich wiederum Ungenauigkeiten in der Dosierung. Beim Bruch der Membran kam es auch vor, daß von der Steuerseite (Luftseite) her Luftblasen in das Medium eingetragen wurden, die natürlich vermieden werden sollen.

Weiterhin ist dort eine Gelenkverbindung zwischen der Nadel und einem die Bewegung der Nadel steuernden Zylinder vorgesehen, damit die Nadel relativ zu ihrem Sitz zentriert wird. Hierzu hat dort ein im Zylinder befindlicher Bolzen eine Spitze, mit der er am Fuß der Nadel anliegt. Der Fuß der Nadel reicht dort in die steuerseitige erste Kammer. Die derart ausgebildete Gelenkverbindung hat sich im Betrieb aber nicht als sonderlich funktionsfähig herausgestellt.

Die Erfindung vermeidet diese Nachteile. Ihr liegt die Aufgabe zugrunde, ein Ventil mit den eingangs genannten Merkmalen vorzuschlagen, welches sich insbesondere durch eine wesentlich bessere Zentrierung der Nadel in der Düsenbohrung in Verbindung mit einer betriebssicheren Ausbildung der Membran auszeichnet.

Zur Lösung dieser Aufgabe ist die Erfindung dadurch gekennzeichnet, daß die Membran durchgehend ausgebildet ist und daß der Fuß der Nadel über eine Scheibe aus einem die Gleitreibung verringernden Material auf der der zweiten Kammer zugewandten Fläche der Membran aufsitzt.

Man geht somit vom Prinzip der durchbohrten Membran ab und gestaltet diese eben und durchgehend aus, wodurch Dichtigkeitsprobleme vermieden werden. Auch erfolgt die Bewegung der Membran beim Umschalten mit konstanter Geschwindigkeit ohne den geschilderten Klappeffekt beim Stand der Technik. Die die Gleitreibung wesentlich verringernde Scheibe bewirkt, daß der Fuß der Nadel in radialer Richtung sich bezüglich der Membran selbst zentrieren kann, wozu eine zusätzlich vorgesehene Schraubendruckfeder ebenfalls beiträgt.

Beschädigungen der Membran werden besonders gut vermieden, wenn der Fuß der Nadel tellerförmig verbreitert ist, wobei die Scheibe etwa den Durchmesser des Tellers hat. Dadurch stützt sich die Nadel mit ihrem Fuß über eine besonders große Fläche auf der Membran ab, so daß ein nachteiliges Knicken der Membran besonders gut vermieden wird.

Weiterhin wird es bevorzugt, wenn zwischen dem Düsenauslaß des Gehäuses und der Nadel ein Einsatz auswechselbar gehalten ist. Mit dem Einsatz kann man die Düsenöffnung den jeweils gewünschten Verhältnissen leicht anpassen.

Fernerhin wird es bevorzugt, wenn der an der Steuerseite der Membran anliegende und von der Feder vorgespannte Stößel mit einem verbreiterten Fuß an der steuerseitigen Fläche der Membran anliegt. Auch dadurch bleibt die steuerseitige Fläche der Membran vor nachteiligen Biege- oder Knickbeanspruchungen gut geschützt. Hier braucht keine Scheibe aus Polytetrafluoräthylen vorgesehen zu sein, obgleich dies auch möglich ist.

Um dort die Reibung auf ein Minimum zu beschränken, wird es nämlich bevorzugt, wenn die Feder über einen Federteller unter Zwischenlage einer Kugel auf den Stößel einwirkt. Dadurch wird dort ein Kugelgelenk ausgebildet, über das nur axiale Kräfte übertragen werden, so daß der Fuß des Stößels sich relativ zur Membran nicht in radialer Richtung verschieben kann. Weiterhin wird es bevorzugt, wenn bei einer wenigstens zweiteiligen Ausführung des Gehäuses die Membran über eine Büchse an ihrem Rand eingespannt wird, eine Tellerfeder zwischen den beiden Gehäuseteilen vorgesehen ist, die die Büchse vorspannt. Dadurch können verhältnismässig große Fertigungstoleranzen aufgenommen werden, und über die von der Tellerfeder vorgespannte Büchse wird die Membran an ihrem Rande eingespannt bzw. vorgespannt.

Während beim Stand der Technik der Steuerdruck über einen entsprechenden Anschluß erreicht wurde, wird es weiterhin bevorzugt, wenn ein von einem Pilotventil gesteuerter Zylinder vorgesehen ist, der den Steuerdruck aufbringt. Dadurch bedingt können um ein Mehrfaches größere Schließkräfte aufgebracht werden und die Schaltzeiten werden fühlbar verringert.

Wie beim Stand der Technik soll erfindungsgemäss auch eine von außen betätigbare Spindel zum Einstellen der Kraft der Feder vorgesehen sein. Diesbezüglich wird es bevorzugt, wenn die Spindel mit einem Innengewinde des drehgesicherten Federtellers verschraubt ist. Dadurch wird die Feder entsprechend vorgespannt.

Weiterhin wird es bevorzugt, wenn sich die Feder an ihrem der Membran abgewandten Ende auf einer Zwischenplatte abstützt, auf deren anderer Seite sich eine weitere Feder abstützt, die den Zylinder vorspannt. Die Zwischenplatte dient also einerseits als Festanschlag für die Feder und andererseits als Festanschlag für die weitere Feder, die den Zylinder vorspannt, so daß dieser bei seiner Entlüftung wieder in die Ausgangslage zurückgeht.

Fernerhin wird es bevorzugt, wenn das Gehäuse dreiteilig ausgebildet ist, wobei die beiden axial äußeren, kappenförmigen Teile mit dem mittleren, rohrförmigen Teil verschraubt sind. Dadurch lässt sich das Gehäuse besonders gut auseinandernehmen zwecks Wartung oder Austausch der verschiedenen in den einzelnen Teilen befindlichen und gehaltenen Bauelemente.

Fernerhin wird es bevorzugt, wenn im mittleren Gehäuseteil eine Aussparung vorgesehen ist. Durch die Aussparung kann ein Leck oder Bruch der Membran sofort festgestellt werden.

Desweiteren wird es bevorzugt, wenn in der Büchse ein Durchgang in axialer Richtung angelegt ist. Bei einem Bruch der Membran kann das Medium über diesen Durchgang und über die Aussparung im Gehäuse abfließen, so daß die anderen Bauteile des Ventils durch das Medium nicht mehr verschmutzt werden.

Schließlich wird es bevorzugt, wenn der Durchgang ein Innengewinde aufweist. Dieses dient zur Montageerleichterung, wobei man in das Innengewinde einen entsprechenden Gewindebolzen einschrauben kann und dann die Büchse in Richtung zur steuerseitigen Kammer aus dem Gehäuse herausziehen kann.

Die Erfindung wird im folgenden anhand eines Ausführungsbeispieles näher erläutert, aus dem sich weitere wichtige Merkmale ergeben.

Es zeigt:

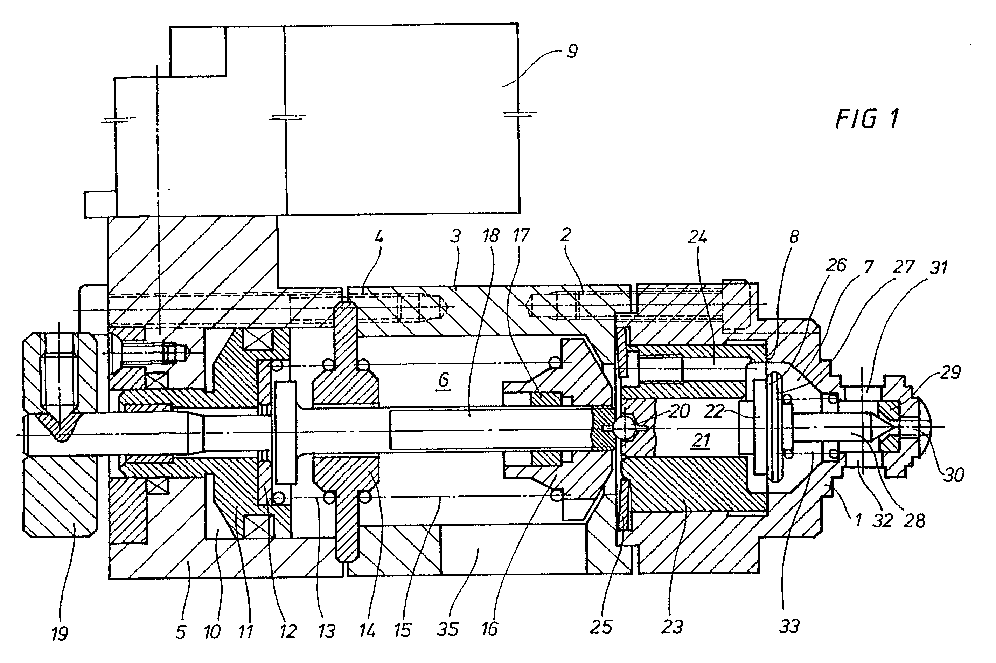

Figur 1: einen Längsschnitt durch das erfindungsgemässe Ventil ;

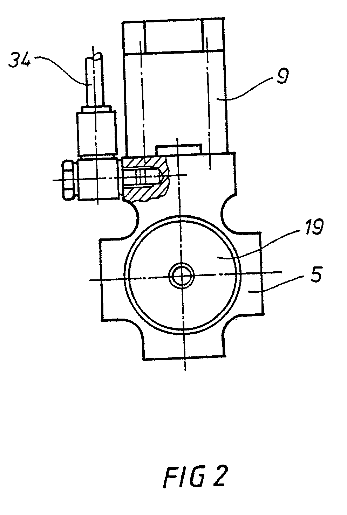

Figur 2: eine Ansicht in Richtung des Pfeiles A von Figur 1.

Einleitend sei bemerkt, daß bezüglich des grundsätzlichen Aufbaus und Einsatzzwecks das erfindungsgemässe Ventil insbesondere zum Einsatz wie in der eingangs erwähnten DE-OS 34 31 112 konstruiert ist, wo es vorzugsweise als Dosierventil und/oder Rezirkulationsventil dient und mit einem Mischkopf zur reaktiven Mischung von Kunststoff-Komponenten zusammenarbeitet.

Das gezeigte Ventil weist ein dreiteiliges Gehäuse auf, bestehend aus einem vorderen, kappenartigen Gehäuseteil 1, das über Schrauben 2 mit einem mittleren, rohrförmigen Gehäuseteil 3 verschraubt ist, das wiederum über Schrauben 4 mit einem hinteren, ebenfalls kappenartigen Gehäuseteil 5 verschraubt ist.

Im Gehäuse ist eine erste, steuerseitige Kammer 6 ausgebildet und eine zweite, medienseitige Kammer 7. Die beiden Kammern werden über eine ebene, nicht unterbrochene Membran 8 voneinander getrennt.

Auf die erste Kammer 6 wird über ein Pilotventil 9 Steuerdruck aufgebracht, das eine Kammer 10 mit Druck beaufschlagt, die nach rechts, d.h. in Richtung zur Membran hin, von einem in axialer Richtung beweglichen Kolben 11 abgeschlossen wird.

An der anderen Seite hat der Kolben 11 eine mittige Ausnehmung, in die ein Distanzring 12 eingesetzt ist, der aus verschleißfestem Material besteht und damit ein Einarbeiten einer Feder 13 in den aus Leichtmetall bestehenden Kolben 11 verhindert. Das andere Ende der Feder 13 stützt sich auf einem Ansatz einer Zwischenplatte 14 ab, die gehäusefest montiert ist.

An der anderen Seite hat die Zwischenplatte einen ähnlichen Ansatz zum Abstützen des linken Endes einer Feder 15, deren anderes Ende wiederum an einem entsprechenden Ansatz eines Federtellers 16 gehalten ist. Der Federteller ist über eine Lochplatte 17 drehfest auf einer Spindel 18 gelagert. Sie ist in axialer Richtung an der Spindel bei Drehung der Spindel verschiebbar, wobei die Lochplatte 17 als Anschlag wirkt. Die Spindel kann über ein Handrad 19 gedreht werden, wobei sich dann der Federteller in axialer Richtung verschiebt und die Feder 15 entsprechend vorspannt.

Die Spitze der Spindel 18 hat eine kugelförmige Ausnehmung zur Aufnahme einer Kugel 20, die mit ihrem anderen End ein eine entsprechende Ausnehmung eines Kolbens 21 eingesetzt ist. Der Kolben hat einen verbreiterten Fuß 22, mit dem er an der linken Fläche der Membran 8 anliegt.

Die Membran ist über eine Büchse 23 an einer Innenschulter des Gehäuses 1 an ihrem Rand festgespannt. Die Büchse hat einen mit einem Innengewinde versehenen Durchgang 24. Am linken Ende liegt an der Büchse eine Tellerfeder 25 an, die zwischen die beiden Gehäuseteile 1,3 eingesetzt und dort gehalten ist.

Am anderen Ende liegt an der Membran 8 eine Scheibe 26 aus Polytetrafluoräthylen oder anderem geeigneten Material an und an der Scheibe wiederum ein verbreiterter Fuß 27 einer Düsennadel 28.

Die Düsennadel arbeitet mit einem Sitz zusammen, der durch einen auswechselbar gehaltenen Einsatz 29 ausgebildet wird, der in eine entsprechende Aufnahme des Gehäuseteils 1 von innen eingesetzt ist. Der Einsatz hat eine kegelig sich verjüngende Durchgangsbohrung, die in eine Abgabeöffnung 30 des Ventils übergeht.

Im Gehäuseteil 1 sind außerdem in radialer Richtung in Höhe der Nadel 28 verlaufende Öffnungen 31, 32 für ein Medium vorgesehen.

Auf den tellerartigen Fuß 27 der Nadel wirkt eine weitere Feder 33 ein, die sich an einem Absatz des Gehäuses abstützt.

Steuerluft wird über eine Leitung 34 der Kammer 10 zugeführt.

Wie bereits in der erwähnten DE-OS 34 31 112 beschrieben, wird über die Steuerluft, das Pilotventil 9 und den Kolben 11 sowie den Kolben 21 die Membran 8 entsprechend verschoben, wodurch dann die Nadel 28 die Abgabeöffnung 30 verschließt bzw. mehr oder weniger öffnet. In geschlossener Stellung des Mischventils kann das Medium durch die Öffnung 31 einströmen und verlässt die Kammer 7 durch die Öffnung 32. Ist aber die Abgabeöffnung 30 geöffnet, so kann das Medium durch die Abgabeöffnung bzw. Düsenöffnung 30 das Ventil verlassen. Wegen weiterer Einzelheiten wird auf die erwähnte DE-OS verwiesen.

**Ansprüche**

1. Ventil mit einem Gehäuse (1,3,5) mit einem Aufnahmeraum, der durch eine Membran (8) in eine erste steuerseitige Kammer (10) unterteilt ist, die über einen ersten Anschluß (34) an einem Steuerdruck angeschlossen werden kann, sowie in eine zweite, medienseitige Kammer (7), die über wenigstens einen zweiten Anschluß (31,32) an ein unter Druck stehendes Medium angeschlossen werden kann und in der eine mit der Membran (8) verbundene Düsennadel (28) abhängig vom Steuerdruck relativ zu ihrem Sitz (29) verschiebbar ist derart, daß ein Auslaß (30) der zweiten Kammer (7) verschlossen bzw. geöffnet wird, wobei die Membran (8) über eine Feder (15) in die Schließlage der Nadel (28) vorgespannt ist, **dadurch gekennzeichnet,** daß die Membran (8) durchgehend ausgebildet ist und daß der Fuß (27) der Nadel (28) über eine Scheibe (26) aus einem die Gleitreibung verringerndem Material auf der der zweiten Kammer (7) zugewandten Fläche der Membran (8) aufsitzt.

2. Ventil nach Anspruch 1, **dadurch gekennzeichnet,** daß der Fuß (27) der Nadel (28) tellerförmig verbreitet ist und daß die Scheibe (26) etwa den Durchmesser des Tellers hat.

3. Ventil nach Anspruch 1 oder 2, **dadurch gekennzeichnet,** daß eine Schraubendruckfeder (33) vorgesehen ist, die sich einerseits am Fuß (27) der Nadel (28) und andererseits an einem Ansatz in der Nähe des Düsenauslasses (30) abstützt.

4. Ventil nach einem der Ansprüche 1 - 3, **dadurch gekennzeichnet,** daß zwischen dem Düsenauslass (30) des Gehäuses und der Nadel (28) ein Einsatz (29) auswechselbar gehalten ist.

5. Ventil nach einem der Ansprüche 1 - 4 mit einem an der Steuerseite der Membran anliegenden und von der Feder vorgespannten Stößel (21), **dadurch gekennzeichnet,** daß der Stößel (21) mit einem verbreiterten Fuß (22) an der steuerseitigen Fläche der Membran (8) anliegt.

6. Ventil nach Anspruch 5, **dadurch gekennzeichnet,** daß die Feder (15) über einem Federteller (16) unter Zwischenlage einer Kugel (20) auf den STößel (21) einwirkt.

7. Ventil nach einem der Ansprüche 1 - 6, wobei das Gehäuse wenigstens zweiteilig ist und die beiden Gehäuseteile (1,3) miteinander verschraubt sind, wobei ferner die Membran über eine Büchse (23) an ihrem Rand eingespannt wird, **dadurch gekennzeichnet,** daß eine Tellerfeder (25) zwischen den beiden Gehäuseteilen vorgesehen ist, die die Büchse (23) vorspannt.

8. Ventil nach einem der Ansprüche 1 - 7, **dadurch gekennzeichnet,** daß ein von einem Pilotventil (9) gesteuerter Zylinder (11) vorgesehen ist, der den Steuerdruck aufbringt.

9. Ventil nach einem der Ansprüche 6 - 8 mit einer von außen betätigbaren Spindel (18) zum Einstellen der Kraft der Feder (15), **dadurch gekennzeichnet,** daß die Spindel (18) mit einem Innengewinde des drehgesicherten Federtellers (16) verschraubt ist.

10. Ventil nach Anspruch 8 oder 9, **dadurch gekennzeichnet,** daß sich die Feder (15) an ihrem der Membran (8) abgewandten Ende auf einer Zwischenplatte (14) abstützt, auf deren anderer Seite sich eine weitere Feder (13) abstützt, die den Zylinder (11) vorspannt.

11. Ventil nach einem der Ansprüche 1 - 10, **dadurch gekennzeichnet,** daß das Gehäuse dreiteilig ausgebildet ist, wobei die beiden axial äußeren kappenförmigen Teile (1,5) mit dem mittleren, rohrförmigen Teil (3) verschraubt sind.

**12.** Ventil nach Anspruch 1, **dadurch gekennzeichnet,** daß im mittleren Gehäuseteil (3) eine Aussparung (35) vorgesehen ist.

**13.** Ventil nach Anspruch 12, **dadurch gekennzeichnet,** daß in der Büchse (23) ein Durchgang (24) in axialer Richtung angelegt ist.

**14.** Ventil nach Anspruch 13, **dadurch gekennzeichnet,** daß der Durchgang (24) ein Innengewinde aufweist.

## Claims

**1.** A valve comprising a housing (1, 3, 5), with a reception space divided by a diaphragm (8) into a first control-side chamber (10), which can be connected to a control pressure via a first connector (34), as well as a second, media-side chamber (7) which can be connected to a medium under pressure via at least one second connector (31, 32), and wherein a jet needle (28) coupled to the diaphragm (8) is displaceable with respect to its seat (29) as a function of the control pressure, in such a way that an outlet (30 from the second chamber (7) is closed or opened, respectively, the diaphragm (8) being biased via a spring (15) into the closed position of the needle (28), characterised in that the diaphragm (8) is of continuous form and that the base (27) of the needle (28) rests on the surface of the diaphragm (8) which faces towards the second chamber (7) via a disc (26) of a material which reduces sliding friction.

**2.** A valve according to claim 1, characterised in that the base (27) of the needle (28) is enlarged in plate-like form and that the disc (26) has approximately the diameter of the plate.

**3.** A valve according to claim 1 or 2, characterised in that a compression coil spring (33) is provided, which bears on the one hand against the base (27) of the needle (28) and on the other hand against a shoulder close to the nozzle outlet (30).

**4.** A valve according to one of claims 1 to 3, characterized in that an insert (29) is replaceably secured between the nozzle outlet (30) of the housing and the needle (28).

**5.** A valve according to one of claims 1 to 4, comprising a tappet (21) bearing on the control-side of the diaphragm and biased by the spring, characterised in that the tappet (21) bears on the control-side surface of the diaphragm (8) via an enlarged base (22).

**6.** A valve according to claim 5, characterised in that the spring (15) acts on the tappet (21) via a spring plate (16), with the interpositioning of a ball (20).

**7.** A valve according to one of claims 1 to 6, wherein the housing is in at least two parts and both housing parts (1, 3) are bolted together, wherein furthermore the diaphragm is clamped by its edge via a bushing (23) characterised in that a plate spring (25) which biases the bushing (23) is provided between the two housing parts.

**8.** A valve according to one of claims 1 to 7, characterised in that there is provided a cylinder (11), which provides the control pressure and is controlled by means of a pilot valve (9).

**9.** A valve according to one of claims 6 to 8, comprising a spindle (18) operable from the outside to adjust the force of the spring (15), characterised in that the spindle (18) is screw-connected to an internal screw thread of the spring plate (16) which is secured against rotation.

**10.** A valve according to claim 8 or 9, characterised in that the spring (15) bears at its end facing away from the diaphragm (8), against an intermediate plate (14) against the other side of which bears another spring (13) which biases the cylinder (11).

**11.** A valve according to one of claims 1 to 10, characterised in that the housing is made in three parts, the two axially outer cap-like parts (1, 5) being bolted to the central tubular part (3).

**12.** A valve according to claim 1, characterised in that an excision (35) is provided in the central housing part (3).

**13.** A valve according to claim 12, characterised in that a passage (24) is formed in the axial direction in the bushing (23).

**14.** A valve according to claim 13, characterised in that the passage (24) has an internal screw thread.

## Revendications

1. Soupape munie d'une enveloppe (1, 3, 5) comportant un espace de logement divisé par une membrane (8) en une première chambre située côté commande (10) pouvant être reliée par l'intermédiaire d'un premier raccord (34) à une pression de commande, et en une seconde chambre située côté agent (7) qui peut être reliée par un ou plusieurs seconds raccords (31, 32) à un agent sous pression et dans laquelle une aiguille d'injection (28) reliée à la membrane (8) est mobile par rapport à son siège (29) en fonction de la pression de commande, de telle sorte qu'un orifice de sortie (30) de la seconde chambre (7) se ferme ou s'ouvre, la membrane (8) étant sollicitée par précontrainte en position de fermeture de l'aiguille (28) sous l'action d'un ressort (15), caractérisée en ce que la membrane (8) est conçue de façon continue et en ce que la base (27) de l'aiguille (28) repose, par l'intermédiaire d'une rondelle (26) réalisée en un matériau réduisant la friction de glissement, sur la surface de la membrane (8) tournée vers la seconde chambre (7).

2. Soupape selon la revendication 1, caractérisée en ce que la base (27) de l'aiguille (28) est élargie en forme d'assiette et en ce que la rondelle (26) présente approximativement le diamètre de l'assiette.

3. Soupape selon la revendication 1 ou 2, caractérisée en ce qu'il est prévu un ressort cylindrique de compression (33) qui s'appuie d'un côté au niveau de la base (27) de l'aiguille (28) et de l'autre côté au niveau d'un épaulement situé près de l'orifice de sortie de buse (30).

4. Soupape selon l'une des revendications 1 à 3, caractérisée en ce qu'un embout (29) est maintenu, remplaçable, entre l'orifice de sortie de buse (30) de l'enveloppe et l'aiguille (28).

5. Soupape selon l'une des revendications 1 à 4, comportant un poussoir (21) situé au niveau du côté commande de la membrane et précontraint par le ressort, caractérisée en ce que le poussoir (21) est appliqué par l'intermédiaire d'une base élargie (22) contre la surface située côté commande de la membrane (8).

6. Soupape selon la revendication 5, caractérisée en ce que le ressort (15) agit sur le poussoir (21) par l'intermédiaire d'une coupelle de ressort (16) et d'une bille (20) intercalée.

7. Soupape selon l'une des revendications 1 à 6, dans laquelle l'enveloppe est au moins en deux parties et les deux parties d'enveloppe (1, 3) sont vissées l'une dans l'autre, et dans laquelle la membrane est serrée au niveau de son bord par un manchon (23), caractérisée en ce qu'il est prévu entre les deux parties d'enveloppe une rondelle-ressort (25) qui soumet le manchon (23) à une précontrainte.

8. Soupape selon l'une des revendications 1 à 7, caractérisée en ce qu'il est prévu un cylindre (11) commandé par une soupape pilote (9) qui applique la pression de commande.

9. Soupape selon l'une des revendications 6 à 8 comportant une tige (18) apte à être actionnée de l'extérieur pour régler la force du ressort (15), caractérisée en ce que ladite tige (18) est en prise par vissage avec un filetage intérieur de la coupelle de ressort (16) bloquée à l'encontre d'une rotation.

10. Soupape selon la revendication 8 ou 9, caractérisée en ce que le ressort (15) s'appuie, au niveau de son extrémité opposée à la membrane (8), sur une plaque intermédiaire (14) sur le second côté de laquelle s'appuie un second ressort (13) qui soumet le cylindre (11) à une précontrainte.

11. Soupape selon l'une des revendications 1 à 10, caractérisée en ce que l'enveloppe est conçue en trois parties, les deux parties extérieures, axialement, en forme de capuchons (1, 5) étant en prise par vissage avec la partie tubulaire médiane (3).

12. Soupape selon la revendication 1, caractérisée en ce qu'il est prévu un évidement (35) dans la partie d'enveloppe (3) médiane.

13. Soupape selon la revendication 12, caractérisée en ce qu'un passage (24) est ménagé dans le sens axial dans le manchon (23).

14. Soupape selon la revendication 13, caractérisée en ce que le passage (24) possède un filetage intérieur.

FIG 1

FIG 2